# EUROPÄISCHE PATENTANMELDUNG

(11) **EP 1 237 380 A2**
(43) Veröffentlichungstag der Anmeldung: **04.09.2002**
(21) Anmeldenummer: 02090024.7
(22) Anmeldetag: 18.01.2002
(51) Int. Cl.: H04Q 3/00

(54) **Verfahren zum Herstellen und Abrechnen einer Telekommunikationsverbindung**

(30) Priorität: 27.02.2001 DE 10110349
(71) Anmelder: SIEMENS AKTIENGESELLSCHAFT, 80333 München (DE)
(72) Erfinder: Aschir, Alexander, 560001 Bangalore (IN); Gabrysch, Mathias, Dr., 80469 Muenchen (DE)

(57) **Zusammenfassung**

Die vorliegende Erfindung betrifft ein Verfahren zum Herstellen und standortbezogenen Abrechnen einer Telekommunikationsverbindung zwischen einem ersten Telekommunikationsteilnehmer (1), insbesondere einem Mobilfunkteilnehmer, der sich an einem bestimmten Standort (3) befindet und einem zweiten Telekommunikationsteilnehmer (2) in einem Kommunikationsnetz, bei dem die Telekommunikationsverbindung zu einem Vorzugs-Gebührentarif abgerechnet wird, wenn der Standort (3) des ersten Telekommunikationsteilnehmers (1) zu einer getroffenen Auswahl an Standorten gehört, wobei das Herstellen der Telekommunikationsverbindung von einem Intelligenten Netz (IN) gesteuert wird und zum standortbezogenen Abrechnen benötigte Informationen aus einer externen Service-Logik über eine offene Netzwerkschnittstelle dem Kommunikationsnetz zur Verfügung gestellt werden.

## Beschreibung

Die Erfindung betrifft ein Verfahren zum Herstellen und standortbezogenen Abrechnen einer Telekommunikationsverbindung zwischen einem ersten Telekommunikationsteilnehmer, insbesondere einem Mobilfunkteilnehmer, der sich an einem bestimmten Standort befindet, und einem zweiten Telekommunikationsteilnehmer in einem Kommunikationsnetz.

Der generell schnelllebige Telekommunikationsmarkt ist durch häufige Veränderungen gekennzeichnet. Gleichzeitig führt wachsende Konkurrenz im Konsumgüterbereich immer mehr zur Notwendigkeit, sich von seinen Konkurrenten zu differenzieren. Daher ist es eine Aufgabe der vorliegenden Erfindung, ein flexibles und leicht an veränderte Bedingungen anpassbares Verfahren bereitzustellen, mit dem es einem Nicht-Netzwerkbetreiber möglich ist, seinen Kunden in einem Kommunikationsnetz Telekommunikationsverbindungen zu einem Vorzugs-Gebührentarif zu gewähren.

Gelöst wird diese Aufgabe durch ein erfindungsgemäßes Verfahren gemäß Anspruch 1. Weitere bevorzugte Ausführungsformen sind in den Unteransprüchen angegeben.

Gemäß Anspruch 1 wird ein Verfahren zum Herstellen und standortbezogenen Abrechnen einer Telekommunikationsverbindung zwischen einem ersten Telekommunikationsteilnehmer, insbesondere einem Mobilfunkteilnehmer, der sich an einem bestimmten Standort befindet und einem zweiten Telekommunikationsteilnehmer in einem Kommunikationsnetz bereitgestellt, bei dem die Telekommunikationsverbindung zu einem Vorzugs-Gebührentarif abgerechnet wird, wenn der Standort des ersten Telekommunikationsteilnehmers zu einer getroffenen Auswahl an Standorten gehört, wobei
das Herstellen der Telekommunikationsverbindung von einem Intelligenten Netz (IN) gesteuert wird und
zum standortbezogenen Abrechnen benötigte Informationen aus einer externen Service-Logik über eine offene Netzwerkschnittstelle dem Kommunikationsnetz zur Verfügung gestellt werden.

Ein Intelligentes Netz enthält typischerweise einen intelligenten Knoten, welcher die Abläufe in diesem Netz überwacht und steuert. Eine wesentliche Voraussetzung für das Funktionieren eines Intelligenten Netzes ist ein sehr leistungsfähiger Informationsaustausch zwischen den Netzknoten und einer großen zentralen Datenbank mit globalen Netzinformationen, auf die von jedem Punkt des Netzes schnell zugegriffen werden kann. Im Allgemeinen werden die Dienste durch bestimmte Dienstkennzahlen oder bestimmte Ereignisse aktiviert. Die Dienstkennzahlen adressieren dabei keine Vermittlungsstelle oder Endeinrichtung am Netz, sondern sie aktivieren die Diensterbringer im Netz, d.h. die Kennzahl ruft einen bestimmten Dienst auf. Die dann folgende Rufnummer wird einem extern am Netz angeschalteten IN-Rechner übergeben, der sie entsprechend im aufgerufenen Dienst auswertet. Erst danach werden die Einstellinformationen an das Netz gegeben und die beiden Kommunikationspartner miteinander verbunden. Die Informationen zur Ermittlung des aktuellen Dienstziels werden im IN-Rechner in Datenbanken pro Dienst und Dienstkunde gespeichert. Diese Struktur erfordert eine globale Administration der Betriebe, was bislang Aufgabe des Netzwerkoperators war. Nur der Netzwerkoperator hat Kontrolle über Netzwerkressourcen und die damit verbundenen Funktionalitäten. INbasierte Mehrwertdienste benötigen Zugriff und Kontrolle auf Netzwerkelemente und Netzwerkfunktionen und werden aus diesem Grund nur von Netzwerkoperatoren selbst direkt angeboten.

Der durch das erfindungsgemäße Verfahren bereitgestellte Dienst besteht im wesentlichen in dem standortbezogenen Abrechnen einer Telekommunikationsverbindung. Mittels des erfindungsgemäßen Verfahrens ist es nun möglich, die zum standortbezogenen Abrechnen benötigten Informationen nicht einer großen, zentralen Datenbank eines vom Netzwerkoperators verwalteten IN-Rechners beziehen zu müssen, sondern sie über eine offene Netzwerkschnittstelle durch eine externe Service-Logik bereitzustellen. Eine IN-Hardware besteht im Allgemeinen aus Vermittlungsstellen des Fernsprechnetzes, sogenannten Service Switching Points (SSP), die den eigentlich Aufruf eines IN-Dienstes erkennen und zu einem entsprechenden Service Control Point (SCP) leiten. Erkennen eines IN-Dienstes kann, wie bereits erwähnt, über entsprechende Dienstkennzahlen oder aufgrund bestimmter Ereignisse erfolgen. Der Dienst selbst läuft in dem SCP, einem leistungsfähigen Rechner mit einer großen, komplexen Datenbank. Der SSP ist eine digitale Vermittlungsstelle mit speziellen Steuerungsprogrammen. Der Aufruf eines IN-Dienstes ist in der Steuerung der Vermittlungsstelle an einen entsprechend vordefinierten Trigger gekoppelt. An diesem Trigger-Punkt setzt der IN-Dienst an. Hier wird beispielsweise die Signalisierung an den SCP geleitet, der die zur Auswertung des IN-Dienstes benötigten Informationen gespeichert hat und nach erfolgter Auswertung entsprechende Einstellinformationen an das Netz zurückgibt. Erfindungsgemäß werden nun die zum standortbezogenen Abrechnen benötigten Informationen einem externen, individuellen Rechner entnommen, der über eine offene Netzwerkschnittstelle an das Netz gekoppelt werden kann.

Die Entwicklung und der Einsatz offener Netzwerkschnittstellen erlaubt die Nutzung von Netzwerkressourcen auch für private Anbieter von Mehrwertdiensten, die keine Netzwerkoperatoren sind. Vorzugsweise handelt es sich bei der offenen Netzwerkschnittstelle um ein von der Parlay-Gruppe definiertes API (Application Programming Interface), im folgenden als Parlay API bezeichnet, oder um ein standartisiertes OSA API. Während das Parlay API vorwiegend im Festnetzbereich Einsatz findet, wird das OSA API vorzugsweise in Mobilfunknetzen verwendet. Das erfindungsgemäße Verfahren ist beispielsweise für eine Kaufhauskette sehr attraktiv. Sie hat somit die Möglichkeit, ihren Kunden, insbesondere Mobilfunkteilnehmern, in Abhängigkeit von Ihrem Standort, beispielsweise während ihres Aufenthaltes in einer Filiale der Kaufhauskette, ein oder mehrere kostenlose oder kostenreduzierte Telefonate zu gewähren. Die anfallenden Gesprächskosten trägt dabei beispielsweise die Kaufhauskette selbst. Es ergeben sich dabei für den Serviceanbieter, wie beispielsweise für die genannte Kaufhauskette eine Reihe von Vorteilen. Zum einen wird der Kunde veranlasst, die Kaufhauskette zu besuchen, wobei er neben dem ihm gewährten kostenlosen oder kostenreduzierten Telefonierens mit gewisser Wahrscheinlichkeit auf das Warenangebot der Kaufhauskette aufmerksam und eventuell zu dem ein oder anderen Kauf verleitet wird. Zum anderen wird sicherlich durch Ankündigung des Dienstes in den entsprechenden Medien eine erhöhte Aufmerksamkeit in der Bevölkerung hervorgerufen. Es kommt dadurch sicherlich zu einer beachtlichen Umsatzsteigerung, da mehr potentielle Kunden die Kaufhauskette besuchen. Insgesamt wird eine höhere Kundenzufriedenheit erreicht, die letztlich sicherlich auch zu einer erhöhten Aufmerksamkeit in der Bevölkerung durch Mundpropaganda führt. Es kommt dadurch zu einer höheren Kundenbindung. Für den Kunden der Kaufhauskette selbst hat es natürlich den Vorteil des kostenlosen Telefonierens. Die Möglichkeit, sich mit einem anderen per Telefon, vorzugsweise per Mobilfunkgerät, beispielsweise über ein potentielles Kaufprodukt auszutauschen und zu beraten wird dadurch wesentlich vereinfacht. Der Kunde hat weniger Hemmungen, den Rat eines nicht Anwesenden per Telefon einzuholen, worauf er ohne diesen ihm von der Kaufhauskette gewährten Dienst aus Kostengründen eventuell verzichten würde und dann eventuell auch auf den Kauf des in Frage stehenden Produktes. Auch für die Netzwerkoperatoren ergeben sich Vorteile. Aufgrund der Möglichkeit für Nicht-Netzwerkoperatoren über eine offene Netzwerkschnittstelle Zugriff auf Netzwerkressourcen zu haben und somit IN-Dienste unmittelbar selbst anbieten zu können, kommt es sicherlich auch für die Netzwerkoperatoren zu erheblichen Umsatzsteigerungen. Zudem kommt es aufgrund des Vorzugs-Gebührentarifs sicherlich zu einem erhöhten Rufaufkommen, was letztlich auch den Umsatz der Netzwerkoperatoren steigert.

In einer besonders bevorzugten Ausführungsform des erfindungsgemäßen Verfahrens wird zu einem Vorzugs-Gebührentarif abgerechnet, wenn der Standort des ersten Telekommunikationsteilnehmers, insbesondere des Mobilfunkteilnehmers, zu einer getroffenen Auswahl an Standorten gehört und gleichzeitig eine oder mehrere weitere ausgewählte Bedingungen erfüllt sind.

Im Falle der Kaufhauskette wäre hier beispielsweise denkbar, das kostengünstige Telefonat an die Anzahl der Aufenthalte in einer Filiale der Kaufhauskette innerhalb eines bestimmten Zeitintervalls zu knüpfen. Ferner könnte das kostengünstige Telefonieren von einem durch den Kunden erzeugten Umsatz abhängig gemacht werden. Weiterhin könnten Beschränkungen dahingehend eingeführt werden, dass ein Kunde nur ein kostenloses oder kostengünstiges Telefonat pro Tag führen darf.

Ferner ist es denkbar, mit dem kostengünstigen Telefonieren gleichzeitig weitere Werbemaßnahmen für die Kaufhauskette zu verknüpfen. Beispielsweise könnte vor dem jeweiligen Telefonat der Sponsor genannt werden oder Ansagen bezüglich besonderer Angebote der Kaufhauskette könnten während oder unmittelbar vor dem Telefonat eingespielt werden.

In einer besonders bevorzugten Ausführungsform des erfindungsgemäßen Verfahrens wird aus einem der externen Service-Logik zugeordneten Datenspeicher abgefragt, ob der Standort des ersten Telekommunikationsteilnehmers zu der Auswahl an Standorten gehört. Ferner werden vorzugsweise auch weitere ausgewählte Daten des ersten Telekommunikationsteilnehmers in einen derartigen Datenspeicher übernommen, mittels derer sich beispielsweise feststellen lässt, ob auch weitere ausgewählte Bedingungen erfüllt sind, um ein kostengünstiges Telefonieren gewähren zu können.

In einer besonders bevorzugten Ausführungsform des erfindungsgemäßen Verfahrens werden die zur Gebührenabrechnung notwendigen Informationen durch die externe Service-Logik erfasst und nach Beendigung der Telekommunikationsverbindung über die offene Netzwerkschnittstelle an eine zur Gebührenabrechnung im Kommuikationsnetz vorgesehene Abrechnungseinheit weitergeleitet.

Diese Ausführungsform des erfindungsgemäßen Verfahrens ermöglicht es, das Abrechnen der Gebühren jeweils nach dem Ende der Telekommunikationsverbindung vorzunehmen und am Ende eines bestimmten Zeitraumes (z.B. am Monatsende) eine Gesamtabrechnung aller in diesem Zeitraum angefallenen Gebühren zu erstellen. Unmittelbar nach dem Telefonat wird festgelegt, wem die Gebühren aufzuerlegen sind, nämlich bei Vorliegen der ausgewählten Bedingungen der Kaufhauskette, anderenfalls dem entsprechenden Telekommunikationsteilnehmer selbst. Dies ermöglicht die traditionelle Art der Gebührenabrechnung, bei der jeweils am Ende des Zeitraumes z.B. eine Rechnung über die angefallenen Gebühren erstellt wird.

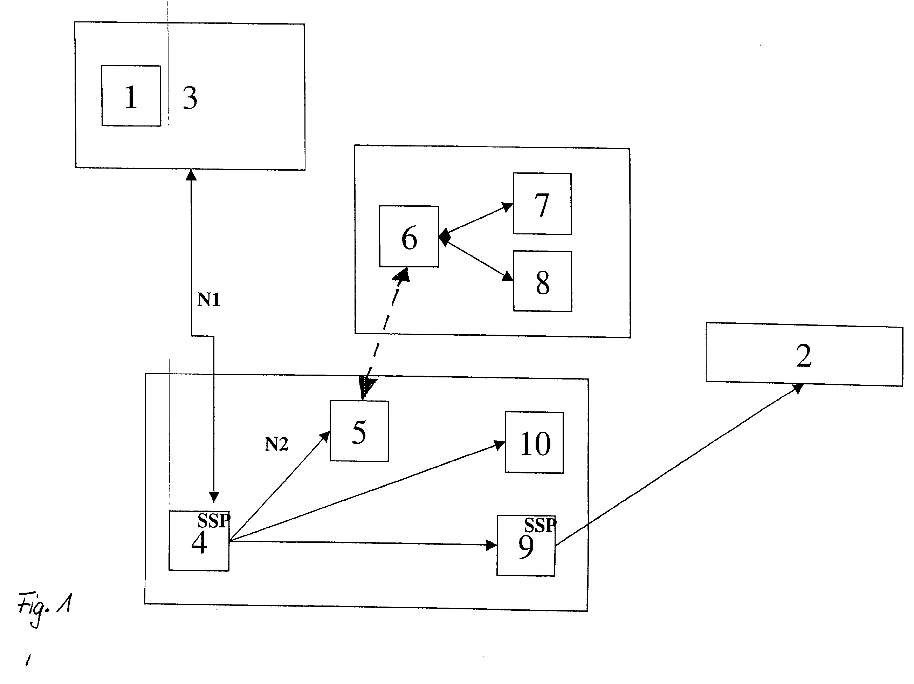

Zur weiteren Erläuterung der Erfindung ist in Figur 1 ein Ausführungsbeispiel eines Kommunikationsnetzes zur Durchführung des erfindungsgemäßen Verfahrens dargestellt.

Für einen ersten Telekommunikationsteilnehmer 1 eines Kommunikationsnetzes, vorzugsweise eines Mobilfunknetzes, soll eine Telekommunikationsverbindung zu einem zweiten Telekommunikationsteilnehmer 2 aufgebaut werden. Der erste Telekommunikationsteilnehmer 1 befindet sich an einem bestimmten Standort 3, beispielsweise, wie hier dargestellt, in einer Filiale einer Kaufhauskette. Der erste Telekommunikationsteilnehmer 1 wählt einen speziellen Servicecode und danach die Nummer des zweiten Telekommunikationsteilnehmers 2, mit dem er kostenlos oder zumindest kostenreduziert telefonieren möchte. Die spezielle Servicenummer könnte beispielsweise in den entsprechenden Filialen der Kaufhauskette kommuniziert werden. Möglich wäre dies beispielsweise durch entsprechende Durchsagen, durch Broschüren oder für alle Mobilfunkteilnehmer über SMS. Am Anfang des Herstellens der gewünschten Telekommunikationsverbindung wird eine Nachricht N1 von dem ersten Telekommunikationsteilnehmer 1 zu einem Dienstevermittlungspunkt 4, einem sogenannten Service Switching Point (SSP) des Kommunikationsnetzes gesendet. In dem Dienstevermittlungspunkt 4 wird erkannt, dass es sich bei der speziellen Servicenummer um eine IN-Nummer handelt, d.h. um eine Nummer zum Aufruf eines IN-Dienstes. Daraufhin wird von dem Dienstevermittlungspunkt SSP 4 eine Nachricht N2 an eine für diese IN-Nummer zuständige IN-Stelle 5 gesendet, im vorliegenden Fall an ein Gateway, das über eine offene Netzwerkschnittstelle, beispielsweise über ein Parlay API (Application Programming Interfce) oder ein OSA API mit einem Rechner 6 (Parlay bzw. OSA Client) kommuniziert. Das Gateway 5 ordnet die IN-Nummer einem entsprechenden Rechner bzw. einem Client 6 zu und benachrichtigt diesen über die offene Netzwerkschnittstelle über das eingetretene Ereignis. Der Client 6 ist außerhalb des Netzes lokalisiert, im dargestellten Fall bei der Kaufhauskette als Diensteanbieterin. Hier läuft die eigentliche Dienstelogik ab. Der Client 6 fragt nun mit Hilfe einer Abfragenachricht von entsprechenden Datenspeichern 7, 8 Information ab, ob der Standort 3 des ersten Telekommunikationsteilnehmers 1 zu der getroffenen Auswahl an Standorten gehört, d.h. ob er sich in einer Filiale der Kaufhauskette befindet und ferner, ob er eine oder mehrere weitere ausgewählte Bedingungen erfüllt, beispielsweise einen bestimmten Umsatz eingebracht hat. Die Datenspeicher 7, 8 senden entsprechende Antwortnachrichten an den Client 6 zurück und teilen diesem mit, dass der erste Telekommunikationsteilnehmer 1 sich sowohl in einer Filiale der Kaufhauskette befindet wie auch einen entsprechenden Umsatz eingebracht hat. Der Client 6 sendet daraufhin über das Gateway 5 eine Verbindungsnachricht und eventuell eine Vergebührungsnachricht an den SSP 4. All die Nachrichten, die von dem Gateway 5 zu dem SSP 4 gesendet werden sind im Rahmen des sogenannten Intelligent Network Application Part (INAP), dem Camel Application Part (CAP) oder dem Mobile Application Part (MAP)definiert. Bei der Verbindungsnachricht handelt es sich dabei beispielsweise um eine CON-Nachricht. Die Nachrichten, die der Client 6 an das Gateway 5 bzw. umgekehrt sendet, sind von der Parlay-Gruppe bzw. von der OSA entsprechend spezifizierte Methoden. Das API bildet dabei die entsprechenden INAP-, CAP- oder MAP-Nachrichten exakt auf die entsprechend definierten, neu spezifizierten Nachrichten ab. Beispielsweise wird eine CON-Nachricht auf eine sogenannte "Route Request"-Nachricht abgebildet.

Aufgrund der Verbindungsnachricht wird von dem SSP 4 die Telekommunikationsverbindung zwischen dem ersten Telekommunikationsteilnehmer 1 und dem zweiten Telekommunikationsteilnehmer 2 über einen weiteren SSP 9 hergestellt. In einer anderen Ausführungsform könnte die Verbindung auch über den gleichen SSP 4 erfolgen.

Die Abrechnung der Telekommunikationsverbindung kann nach den in Telekommunikationsnetzen üblichen Abrechnungsverfahren erfolgen.

## Patentansprüche

1. Verfahren zum Herstellen und standortbezogenen Abrechnen einer Telekommunikationsverbindung zwischen einem ersten Telekommunikationsteilnehmer (1), insbesondere einem Mobilfunkteilnehmer, der sich an einem bestimmten Standort (3) befindet und einem zweiten Telekommunikationsteilnehmer (2) in einem Kommunikationsnetz, bei dem die Telekommunikationsverbindung zu einem Vorzugs-Gebührentarif abgerechnet wird, wenn der Standort (3) des ersten Telekommunikationsteilnehmers (1) zu einer getroffenen Auswahl an Standorten gehört, wobei das Herstellen der Telekommunikationsverbindung von einem Intelligenten Netz (IN) gesteuert wird und
zum standortbezogenen Abrechnen benötigte Informationen aus einer externen Service-Logik über eine offene Netzwerkschnittstelle dem Kommunikationsnetz zur Verfügung gestellt werden.

2. Verfahren nach Anspruch 1,
**dadurch gekennzeichnet,**
**dass** zu einem Vorzugs-Gebührentarif abgerechnet wird, wenn der Standort (3) des ersten Telekommunikationsteilnehmers (1), insbesondere des Mobilfunkteilnehmers, zu einer getroffenen Auswahl an Standorten gehört und gleichzeitig eine oder mehrere weitere ausgewählte Bedingungen erfüllt sind.

3. Verfahren nach Anspruch 1 oder 2,
**dadurch gekennzeichnet,**
**dass** aus einem der externen Service-Logik zugeordneten Datenspeicher (7) abgefragt wird, ob der Standort des ersten Telekommunikationsteilnehmers zu der Auswahl an Standorten gehört.

4. Verfahren nach einem der vorhergehenden Ansprüche 2 oder 3,
**dadurch gekennzeichnet,**
**dass** aus der externen Service-Logik zugeordneten Datenspeichern (7,8) abgefragt wird, ob der Standort des ersten Telekommunikationsteilnehmers zu der Auswahl an Standorten gehört und ob die weiteren ausgewählten Bedingungen erfüllt sind.

5. Verfahren nach einem der vorangehenden Ansprüche,
**dadurch gekennzeichnet,**
**dass** die zur Gebührenabrechnung notwendigen Informationen durch die externe Service-Logik erfasst und nach Beendigung der Telekommunikationsverbindung über die offene Netzwerkschnittstelle an eine zur Gebührenabrechnung im Kommunikationsnetz vorgesehene Abrechnungseinheit (10) weitergeleitet werden.

6. Verfahren nach einem der vorangehenden Ansprüche, **dadurch gekennzeichnet, dass** es sich bei der offenen Netzwerkschnittstelle um ein Parlay oder ein OSA API handelt.
